(19) Europäisches Patentamt / European Patent Office / Office européen des brevets

(11) **EP 2 991 205 A1**

(12) **EUROPÄISCHE PATENTANMELDUNG**

(43) Veröffentlichungstag:
**02.03.2016 Patentblatt 2016/09**

(51) Int Cl.:
*H02K 21/44* (2006.01)    *H02K 41/03* (2006.01)

(21) Anmeldenummer: **14002974.5**

(22) Anmeldetag: **28.08.2014**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(71) Anmelder: **Isele, Norbert**
**79365 Rheinhausen (DE)**

(72) Erfinder: **Isele, Norbert**
**79365 Rheinhausen (DE)**

(74) Vertreter: **Drobnik, Stefanie**
**mepat Patentanwälte**
**Eisenlohrstraße 31**
**76135 Karlsruhe (DE)**

(54) **Rotor-Stator-Anordnung und Induktionsgenerator**

(57) Die vorliegende Erfindung stellt einen Induktionsgenerator zum Erzeugen elektrischen Stromes sowie eine Rotor-Stator-Anordnung (1) für denselben bereit. Eine erfindungsgemäße Rotor-Stator-Anordnung (1) umfasst einen Rotor mit zumindest einer Flussplatte (2) und einen Stator, wobei durch die Bewegung des Rotors relativ zu dem Stator eine Bewegungsrichtung der Flussplatten definiert wird. Erfindungsgemäß weist der Stator eine lineare oder ringförmige Grundplatte (3) auf. Ferner sind auf der Grundplatte (3) entsprechend linear oder ringförmig zumindest zwei Magnetpaare angeordnet. Dabei weist jedes Magnetpaar zur Erzeugung eines dauerhaften Magnetfelds einen ersten Magneten (4a) und einen zweiten Magneten (4b) auf, wobei der Nordpol des ersten Magneten (4a) benachbart zu dem Südpol des zweiten Magneten (4b) und umgekehrt angeordnet ist. Die zumindest eine Flussplatte (2) ist auf einer der Grundplatte abgewandten Seite der Magnetpaare durch den Rotor bewegbar angeordnet.

Fig. 1

EP 2 991 205 A1

Printed by Jouve, 75001 PARIS (FR)

**Beschreibung**

Die Erfindung betrifft einen Induktionsgenerator zum Erzeugen elektrischen Stromes sowie eine Rotor-Stator-Anordnung dafür.

Aus dem Stand der Technik sind Induktionsgeneratoren, insbesondere so genannte Fluxgeneratoren bekannt, die in der Regel ringförmig aufgebaut sind und eine alternierende Anordnung aus Magneten und Spulen aufweisen. Parallel zu der ringförmigen Anordnung sind Flussplatten angeordnet, die um eine Drehachse, die mit dem Mittelpunkt des aus Magneten und Spulen gebildeten Rings übereinstimmt, gedreht werden. Durch diese beidseitig angeordneten Flussplatten wird ein Rotor gebildet, der relativ zu dem aus den Magneten gebildeten Stator bewegt werden kann. Die Bewegung dieser Flussplatten verursacht eine Änderung in dem durch die Magnete erzeugten dauerhaften Magnetfeld, wonach ein Strom In den Spulen induziert wird.

Nachteilig am vorgenannten Stand der Technik ist, dass die bisher bekannten Induktionsgeneratoren aufwändig konstruiert sind und dementsprechend kostenintensiv in der Herstellung sind.

Ausgehend von diesem Stand der Technik ist es Aufgabe der vorliegenden Erfindung, eine verbesserte Rotor-Stator-Anordnung bereitzustellen, die einfach aufgebaut und kostengünstig in der Herstellung ist.

Diese Aufgabe wird durch eine Rotor-Stator-Anordnung mit den Merkmalen des Anspruchs 1 gelöst.

Die weitere Aufgabe, einen Induktionsgenerator zur Erzeugung von elektrischem Strom bereitzustellen, der einfach aufgebaut ist und zuverlässig arbeitet, wird durch den Induktionsgenerator mit den Merkmalen des unabhängigen Anspruchs 9 gelöst.

Weiterbildung bzw. bevorzugte Ausführungsformen sind in den Unteransprüchen der Rotor-Startor-Anordnung sowie des Induktionsgenerators ausgeführt.

Eine erfindungsgemäße Ausführungsform bezieht sich auf eine Rotor-Stator-Anordnung für einen induktionsgenerator. Die Anordnung umfasst einen Rotor mit einer oder mehreren Flussplatte(n) sowie einen Stator, wobei durch die Bewegung des Rotors relativ zu dem Stator eine Bewegungsrichtung der Flussplatten definiert wird. Die Bewegungsrichtung entspricht dabei einer Bewegungs- bzw. Drehrichtung des Rotors, sodass die Flussplatten in eine vorbestimmte Richtung bewegt bzw. gedreht werden. Bei einer ringförmigen Anordnung entspricht eine Drehachse des Rotors dem Mittelpunkt des durch die Flussplatten gebildeten Rings. Die Bewegungsrichtung kann auch umgekehrt werden.

Erfindungsgemäß weist der Stator eine lineare oder ringförmige Grundplatte auf. Hierbei ist der Stator eine feststehende Einheit, die eine ebenfalls feststehende Grundplatte hat. "Fest" im Sinne der Erfindung meint hierbei auf einem Untergrund, zum Beispiel dem Erdboden o. ä. fest montiert, bzw. relativ zu einem sonst ebenfalls nicht beweglichen Bauteil montiert. Der Rotor ist dazu als bewegliches Bauteil ausgebildet, sodass sich eine Bewegung des Rotors relativ zu dem Stator ergibt, sobald der Rotor in Bewegung versetzt wird.

Auf der Grundplatte sind entsprechend linear oder ringförmig zwei oder mehr Magnetpaare angeordnet, wobei jedes Magnetpaar zur Erzeugung eines dauerhaften Magnetfelds einen ersten Magneten und einen zweiten Magneten aufweist. Erfindungsgemäß ist der Nordpol des ersten Magnets benachbart zu dem Südpol des zweiten Magneten und umgekehrt angeordnet. "Umgekehrt" im Sinne der Erfindung meint hierbei, dass Nord- und Südpole der jeweiligen Magnete jeweils alternierend zueinander angeordnet sind, sodass stets ein Nordpol neben einem Südpol zu liegen kommt. Hierdurch wird das durch die Magnetpaare erzeugte Magnetfeld verstärkt.

Ferner ist bzw. sind eine oder entsprechend mehrere Flussplatte(n) auf einer Seite der Magnetpaare angeordnet, die von der Grundplatte abgewandt ist. Die Flussplatte(n) werden von dem Rotor bewegt. Bei einer solchen Anordnung können die Flussplatten parallel zu der Grundplatte liegen und mittels des Rotors in Bewegung versetzt werden.

Vorteilhaft ergeben sich durch die vorgenannte Anordnung eine Möglichkeit Rotor und Stator so zueinander zu bewegen, dass das Magnetfeld ständig wechselnde Flussänderungen, bzw. unterschiedliche Führungen der magnetischen Feldlinien erfährt. Diese magnetische Flussänderung kann zur Induktion elektrischen Stromes genutzt werden. Das Grundprinzip dieser Erfindung ist daher, dass die auf Abstand gehaltenen und aneinandergereihten Flussplatten als Rotor dienen. Die Magnetpaare, die auf der ringförmig oder linearen Grundplatte angeordnet sind, sind dabei fest und bilden zusammen mit der Grundplatte den Stator. So wird vorteilhaft eine konstruktiv einfache Rotor-Stator-Anordnung gebildet. Aufgrund des einfachen Rotors ist die Anordnung auch kostengünstig in der Herstellung. Da nur die Flussplatten jeweils ummagnetisiert werden müssen, sind Verluste durch die Ummagnetisierung gering.

Die Erfindung kann bevorzugt vorsehen, dass zwischen den zwei Magneten eines Magnetpaares ein Distanzabschnitt mit einer vorbestimmten Länge $L1$ vorliegt und die Magnete jeweils eine vorbestimmte Längenabmessung $L2$ aufweisen. Dabei soll die Größe und Form der Flussplatte so bemessen sein, dass ihre Länge $L3$ in ihrer Längserstreckung in der Summe der Durchmesser beider nebeneinander liegender Magnete und der Länge des Distanzabschnitts entspricht:

$$L3 = L2 + L2 + L1$$

Daraus folgt, dass die Länge der Flussplatte vorzugsweise so bemessen ist, dass eine einzelne Platte mindestens ein Magnetpaar nahezu bedecken kann. Die Länge kann je nach Anordnung der Magnete zueinander auch kürzer sein. Zumindest kann sie in einer zweiten Position einen Magneten überdecken und mit benachbarten Magneten überlappen. Hierdurch kann die Feldlinien der Magnete geführt bzw. bei in Bewegung Setzen der Flussplatten beeinflusst werden. Die Länge L3 ist als Mindestlänge zu verstehen und kann auch länger ausfallen, je nach Anwendungsfall oder Stärke der verwendeten Magnete.

In einer Weiterbildung kann die Erfindung vorsehen, dass die Magnete auf der Grundplatte äquidistant zueinander angeordnet sind, und dass die Magnete zylindrisch sind. Alternativ können die Magnete auch anders geformt sein, wie z. B. quaderförmig. Es ist vorgesehen, dass die Magnete Permanentmagnete sein können, jedoch können auch elektromagnetische Magnete eingesetzt werden, um das dauerhafte Magnetfeld zu erzeugen.

Um einen elektrischen Strom induzieren zu können, sieht die Erfindung weiter vor, dass der Stator zumindest eine oder mehrere Spulen aufweisen kann, die in einem Distanzabschnitt zwischen den Magneten an der Grundplatte angeordnet sein können. Der Distanzabschnitt kann alternativ auch so vorgesehen sein, dass er nur zwischen zwei Magnetpaaren oder zwischen den Magneten eines Magnetpaares liegt. Dabei umfasst die Spule den Distanzabschnitt quer zu einer Längserstreckung der Grundplatte. Mehrere Spulen können bevorzugt in Reihe oder parallel geschaltet sein, je nachdem wie der induzierte Strom abgegriffen werden soll.

Bevorzugt sieht die Erfindung in einer Weiterbildung vor, dass die Flussplatte und die Grundplatte aus einem ferromagnetischen Material bestehen kann. Hierbei sollen Materialien gewählt werden, die eine hohe Permeabilität aufweisen. Das kann zum Beispiel Eisen, Stahl mit einem niedrigen Kohlenstoffanteil oder es können auch Legierungen aus Nickel und Eisen, Kobalt und Eisen sowie Aluminium und Eisen sein. Ferner können auch Ferrite und weitere ähnliche Materialien genutzt werden. Bevorzugt sind die Flussplatten sowie die Grundplatte dünn, wobei "dünn" im Sinne der Erfindung meint, dass die vorgenannte Abmessung in einem Bereich von einigen Mikrometern bis zu wenigen Millimeter liegen kann. Dies dient dazu, Hysterese- sowie Wirbelstromverluste durch speziell verarbeitete Bleche zu vermeiden. Die Platten können massiv sein oder aus einer Vielzahl dünner Bleche zusammengesetzt sein. Die Magnete können mit ihrer Unterseite, also ihrer dem Rotor abgewandten Seite, mit dem ferromagnetischen Material der Grundplatte verbunden werden, sodass eine gute Führung der Magnetfeldlinien innerhalb der Grundplatte gegeben ist

In einer ringförmigen Anordnung kann die Anordnung so gestaltet werden, dass durch die Flussplatte im Rotor und der Grundplatte des Stators Plattenebenen definiert werden. Diese Plattenebenen können dabei normal zur Drehachse des Rotors vorliegen, oder alternativ axial zu dieser Drehachse liegen. Entsprechen können dazu die Flussplatten ringförmig bzw. kreisförmig oder rechteckig ausgestaltet sein. Dabei können Flussplatten auch entlang ihrer Längsausdehnung eben oder gebogen sein. Die Anordnung kann damit, sei sie linear oder ringförmig ausgestaltet, an jegliche Anwendungen angepasst werden.

Ferner kann vorgesehen sein, dass zwischen den Flussplatten in Richtung deren Längsausdehnung ein Luftspalt vorliegt oder alternativ ein magnetisch bzw. elektrisch isolierendes Material angeordnet ist. Dies dient dazu, die einzelnen Flussplatten voneinander abzuschirmen und den magnetischen Widerstand zwischen den Flussplatten zu erhöhen. Daraus folgt, dass Feldlinienführung bei einer ständigen Änderung des magnetischen Feldes erzielt werden kann. Als "magnetisch isolierend" gilt ein Material mit einer magnetischen Permeabilitätszahl kleiner als 1, insbesondere nahe 0. Elektrisch isolierend ist ein Werkstoff mit einem spezifischen Widerstand größer als $1 \cdot 10^{10} \ \Omega \ mm^2/m$, insbesondere größer als $1 \cdot 10^{15} \ \Omega \ mm^2/m$. Beide Angaben gelten für Normbedingungen (Zimmertemperatur etc.). Es kann aber auch vorgesehen sein, dass die Flussplatten zur Erhöhung des magnetischen Widerstands zwischen den Flussplatten geeignet geformt werden. Dazu können die Flussplatten abgerundete Ränder aufweisen und sich zu den Rändern hin verjüngen. Dabei können sich die Flussplatten in Bezug auf ihre Dicke und auch ihre Breite kontinuierlich verjüngen. Abgerundete bzw. sich verjüngende Ränder bilden keine abrupte Abbruchkante, wodurch Wirbelstromverluste in der Flussplatte verringert werden können.

Um ein dauerhaftes Magnetfeld zu erzeugen, können einfache Elektromagnete oder auch Permanentmagnete verwendet werden. In der Regel sind Permanent- oder Dauermagnete zu verwenden, die eine Flussdichte in einem Bereich von 0,1 bis 5 T, bevorzugt 0,3 bis 2,5 und besonders bevorzugt von 1,5 T erreichen können. Dies ist bspw. bei Magneten auf Seltenerd-, Neodym-Eisen-Bor- oder auch Samarium-Cobalt-Basis der Fall. Es können aber auch einfacher Stahl, Aluminium-Nickel-Cobalt, Ferrite oder nichtmetallische, organische Kunststoffe mit permanentmagnetischen Eigenschaften, wie z. B. PANiCNQ, als Magnetbasis dienen. Die zu wählende Feldstärke bemisst sich nach dem zu induzierenden Strom.

Die Erfindung betrifft ferner einen Induktionsgenerator zum Erzeugen von elektrischem Strom mit einer Vielzahl an Magnetpaaren aus zwei Magneten, die dazu ausgebildet sind, ein dauerhaftes Magnetfeld zu erzeugen. Ferner sind eine oder mehrere Spule(n) und eine Mehrzahl an Flussplatten, sowie eine Grundplatte zur Führung des Magnetfelds vorgesehen. Erfindungsgemäß sind die vorgenannten Komponenten in einer Rotor-Stator-Anordnung nach den vorgeschriebenen Ausführungsformen angeordnet.

Es kann eine Bewegungseinheit vorgesehen sein, die den Rotor bewegt und die Geschwindigkeit steuert. Ferner kann der Generator einen Energiespeicher aufweisen, in den der induzierte Strom zumindest zeitweise oder dauerhaft bis zu einer weiteren Verwendung gespeichert werden kann.

Dadurch kann ein sehr einfacher und zuverlässig arbeitender induktionsgenerator aufgebaut werden, der durch die einfachen Komponenten auch kostengünstig in der Herstellung ist. Aufgrund der dünnen Flussplatten muss wenig Material ummagnetisiert werden, wodurch die Magnete kein Gegenfeld erfahren.

Dieser induktionsgenerator arbeitet wie folgt:

Der Rotor ist parallel zu dem Stator in einem bestimmten Abstand angeordnet und wird in

Bewegung versetzt. Dabei werden die Flussplatten entlang der definierten Bewegungsrichtung des Motors relativ zur festen Grundplatte, und damit relativ zu den Magneten bewegt. Bewegt sich der Rotor in Abhängigkeit der Position der Flussplatten nun über die alternierend angeordneten Permanentmagnete, werden die Feldlinien durch den Wechsel von Flussplatte zu magnetisch isolierendem Material und wiederum zur nächsten Flussplatte jeweils unterschiedlich geleitet. Damit wird eine Änderung des lokalen Magnetfelds hervorgerufen. Die Magnete sind auf der zur Rotorseite abgewandten Seite der Grundplatte, die aus dem ferromagnetischen Material besteht, verbunden. Durch die Bewegung des Rotors wird nun eine magnetische Flussänderung erzeugt, die auch als Änderung des magnetischen Flusses in den Spulen (Feldlinien werden durch die Grundplatte geleitet) hervorgerufen und dementsprechend ein Strom in diesen Spulen induziert, was in einer real abgreifbaren elektrischen Spannung resultiert.

Die Bewegungsrichtung der Flussplatten in der linearen Anordnung kann auch periodisch umgekehrt werden, sodass oszillieren des Rotors über dem Stator erzeugt wird. Eine Oszillation im Sinne der Erfindung kann so verstanden werden, das entweder durch eine Hin- und Herbewegung in einem linearen Induktionsgenerator oder eine Drehbewegung des Rotors in einem ringförmigen Induktionsgenerator und damit immer wieder auftretendes periodisches Vorbeigleiten einer bestimmten Flussplatte eine Schwingung erzeugt. Hierdurch kann folglich ein Wechselstrom kleiner oder größerer Amplitude erzeugt werden.

Bewegt man eine einzelne Platte über einen Magneten mit einem Nordpol so erfährt diese Platte zunächst eine Anziehungskraft von dem benachbarten Magneten mit Südpol. Wird diese Platte von dem Magneten weiter bzw. weggezogen, so muss diese Anziehungskraft wieder aufgebracht werden. Der induktionsgenerator ist hierbei so konstruiert, dass sich die Anzahl der Magnete, die Anzahl der Platten, die Länge der Platten sowie Abstände zwischen den Platten die Anziehungs- und Abstoßungskräfte gegenseitig minimieren. Somit wird durch den Ausgleich, der durch die magnetische Anziehungskraft der Magnete auf die vermutlichen Platten gegeben ist, für die Bewegung des Rotors wenig Energie benötigt, sodass zur Drehung des Rotors nur ein kleines Drehmoment benötigt wird.

Weitere Ausführungsformen sowie einige der Vorteile, die mit diesen und weiteren Ausführungsformen verbunden sind, werden durch die nachfolgende ausführliche Beschreibung unter Bezug auf die begleitenden Figuren deutlich und besser verständlich. Die Figuren sind lediglich eine schematische Darstellung einer Ausführungsform der Erfindung.

Dabei zeigen:

**Fig. 1** eine schematische Ansicht einer erfindungsgemäßen Rotor-Stator-Anordnung mit Flussplatten in einer ersten Position,

**Fig. 2** eine schematische Ansicht der Rotor-Stator-Anordnung mit Flussplatten in einer zweiten Position, und

**Fig. 3** eine Übersicht der unterschiedlichen Abmessungen der Komponenten der Rotor-Stator-Anordnung.

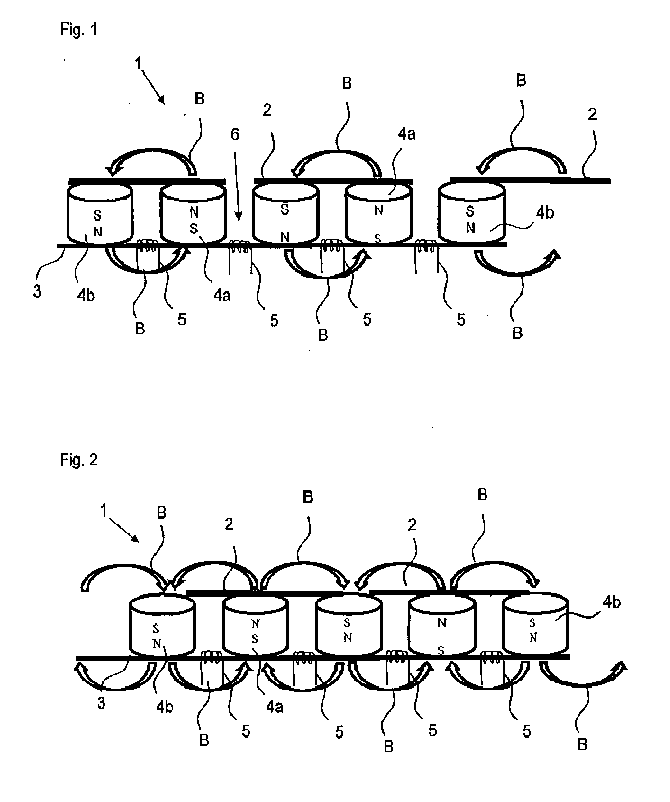

Die in Fig. 1 gezeigte lineare Rotor-Stator-Anordnung 1 weist einen Stator auf, der im Wesentlichen aus einer festen Grundplatte 3 sowie darauf angeordneten Magnetpaaren mit einem ersten Magneten 4a und zweiten Magneten 4b aufgebaut ist. Oberhalb dieser Magnete 4a,4b sind mehrere Flussplatten 2 beabstandet angeordnet. Der Abstand bemisst sich dabei über eine Oberfläche der Magnete 4a,4b.

Ein Mindestabstand zwischen den Magneten 4a,4b wird nur dadurch gegeben, dass der magnetische Widerstand erhöht wird. Dies kann auch durch Formgebung der Flussplatten 2 erreicht werden. Dazu können die Flussplatten 2 abgerundete Ränder aufweisen und sich zu den Rändern hin in ihrer Breite und ihrer Dicke verjüngen.

Diese Flussplatten 2 bilden zusammen mit einer Bewegungseinheit (figurativ nicht dargestellt) einen Rotor, der relativ zu dem Stator bewegt werden kann. Zwischen den Magneten 4a,4b sind Spulen 5 in Distanzabschnitten 6 angeordnet. Die Spulen 5 sind in den Figuren schematisch gezeichnet, wobei eine Art und Weise, wie die Spulen 5 miteinander operativ zu koppeln sind, einem Fachmann bekannt ist. Die Spulen 5 sind an der Grundplatte 3 so angeordnet, dass sie diese quer zu einer Längserstreckung der Grundplatte 3 umfassen. Die Grundplatte 3 wirkt als Spulenkern. Die Grundplatte 3 sowie die Flussplatten 2 bestehen aus einem ferromagnetischen Material, sodass Feldlinien eines durch die Magnete 4a,4b erzeugten dauerhaften Magnetfelds B innerhalb dieser Platten geführt werden. Das Magnetfeld B ist in den Figuren durch Feldlinienpfeile dargestellt, die aus Anschauungsgründen von jeweils den Nordpolen ausgehend zu den jeweils nächsten Südpolen gerichtet sind.

Die Magnete 4a,4b sind nebeneinander auf der Grundplatte 3 befestigt, sodass ein erster Magnet 4a mit seinem Südpol zur Grundplatte 3 weist und mit seinem Nordpol in Richtung der Flussplatten 2. Für einen zweiten Magneten, der direkt benachbart zum ersten Magneten 4a angeordnet ist, ist es genau andersrum, sodass dessen Nordpol des zweiten Magneten 4b zu der Grundplatte 3 weist und sein Südpol in Richtung der Flussplatte 2. Die Flussplatten 2 sind in Längserstreckung des Stators äquidistant voneinander beanstandet und mit einer Bewegungseinheit verbunden, sodass sie relativ zu den feststehenden Magneten bewegbar sind. Hierdurch wird ein Rotor gebildet, der relativ zu dem Stator bewegt werden kann. Die Grundplatte 3 sowie die Flussplatten 2 bilden jeweils Plattenebenen innerhalb des Stators respektive des Rotors. Diese Plattenebenen sind parallel zueinander angeordnet, sodass der Abstand der Flussplatten 2 zu den zum Rotor weisenden Oberflächen der Magnet 4a,4b innerhalb der Rotor-Stator-Anordnung 1 konstant ist.

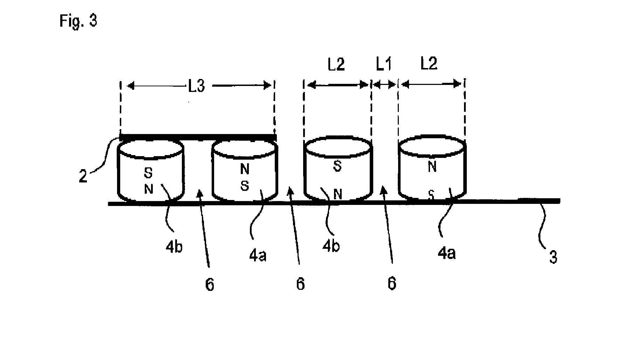

Wie Fig. 3 zeigt, sind spezifische Abmessungen und Abstände der einzelnen Komponenten zueinander einzuhalten, um eine optimale Stromausbeute durch die Rotor-Stator-Anordnung 1 zu erhalten. Die Magnete 4a,4b gemäß der Figuren sind zylindrisch und haben jeweils einen Durchmesser, der einer Längenabmessung L2 entspricht. Ferner sind die Magnete 4a,4b äquidistant zueinander angeordnet, wobei eine Abmessung des Distanzabschnitts 6 in Längserstreckung der Grundplatte 3 einer Länge L1 entspricht. Die Flussplatten 2 müssen dabei so bemessen sein, dass sie mit zumindest zwei der Magnete 4a,4b, d. h. einem vollständiges Magnetpaar, überlappen. Idealerweise werden sie vollständig überdeckt. In diesem Fall entspricht eine Abmessung bzw. Länge L3 der Flussplatte 2 in Richtung der Längserstreckung der Grundplatte 3 der Addition der vorgenannten Abmessungen. D. h. die Abmessung L3 der Flussplatte 2 ist gleich der Addition der Länge L1 des Distanzabschnitts plus zweimal der Länge L2 der Magnete 4a,ab. In nicht gezeigten Ausführungsformen können die Magnete auch eine andere als zylindrische Form haben.

In einer Bewegungsanordnung der Rotor-Stator-Anordnung 1 sind verschiedene Positionen möglich, wie Fig.1 und 2 darstellen. Dabei ist in Fig. 1 eine erste Position der Flussplatten 2 gezeigt, wobei die Magnetpaare jeweils direkt von einer Flussplatte 2 überdeckt werden. Dabei wird das dauerhafte Magnetfeld B durch diese beiden Magnete der Magnetpaare erzeugt, wiederum gekennzeichnet durch die schematischen Feldlinienpfeile. Durch die spezifische Anordnung der Nord- und Südpole zueinander wird ein verstärktes Magnetfeld B im Vergleich zu dem der einzelnen Magnete 4a,4b erzeugt.

In einer zweiten Position, siehe Fig. 2, sind die Flussplatten entlang Ihrer Bewegungsrichtung in ihrer Plattenebene weiter verschoben, sodass nun ein Überlapp mit einem weiteren Magneten 4b eines benachbarten Magnetpaares erfolgt. Hierdurch wird das Magnetfeld B in der Weise beeinflusst, dass die Feldlinien sich auf die geänderte Position der Plussplatten 2 einstellen müssen. Diese veränderte Position gebietet nun, dass das Magnetfeld B sich lokal an dieser Stelle ändert, und dort eine Erhöhung bzw. Erniedrigung, je nach Bewegungsrichtung der Feldstärke erfolgt. Hierdurch wird das Magnetfeld B besonders bei einer steten Bewegung der Flussplatten 2 und damit deren Position ebenfalls periodisch verändert, sodass das Magnetfeld B innerhalb der Grundplatte 3 und damit innerhalb der Spule 5 verändert wird und ein Strom in der Spule 5 induziert wird.

BEZUGSZEICHENLISTE

| 1 | Rotor-Stator-Anordnung |
|---|---|
| 2 | Flussplatte |
| 3 | Grundplatte |
| **4a** | Erster Magnet |
| **4b** | Zweiter Magnet |
| 5 | Spule |
| 6 | Distanzabschnitt |
| | |
| B | Feldlinien Magnetfeld |
| L1 | Länge Distanzabschnitt |
| L2 | Abmessung/Länge Magnet |
| L3 | Länge Flussplatte |

**Patentansprüche**

1. Rotor-Stator-Anordnung (1) für einen Induktionsgenerator,
die einen Rotor mit zumindest einer Flussplatte (2) und
einen Stator umfasst, wobei durch die Bewegung des Rotors relativ zu dem Stator eine Bewegungsrichtung der Flussplatten definiert wird,
**dadurch gekennzeichnet, dass**

   - der Stator eine lineare oder ringförmige Grundplatte (3) aufweist und
   - auf der Grundplatte (3) entsprechend linear oder ringförmig zumindest zwei Magnetpaare angeordnet sind,
   wobei jedes Magnetpaar zur Erzeugung eines dauerhaften Magnetfelds einen ersten Magneten (4a) und einen zweiten Magneten (4b) aufweist, wobei der Nordpol des ersten Magneten (4a) benachbart zu dem Südpol des zweiten Magneten (4b) und umgekehrt angeordnet ist,
   - und dass die zumindest eine Flussplatte (2) auf einer der Grundplatte abgewandten Seite der Magnetpaare durch den Rotor bewegbar angeordnet ist.

2. Rotor-Stator-Anordnung (1) nach Anspruch 1,
**dadurch gekennzeichnet, dass**
zwischen zwei Magneten (4a,4b) eines Magnetpaares ein Distanzabschnitt (6) mit einer vorbestimmten Länge (L1) vorliegt, und die Magnete (4a,4b) jeweils eine vorbestimmte Längenabmessung (L2) aufweisen, wobei die Größe und Form der Flussplatte (2) so bemessen ist, dass ihre Länge (L3) zumindest der Summe der Längen (L2) zweier benachbarter Magnete (4a,4b) und der Länge (L1) des Distanzabschnitts (6) entspricht.

3. Rotor-Stator-Anordnung (1) nach Anspruch 1 oder 2,
   **dadurch gekennzeichnet, dass**
   die Magnete (4a,4b)

   - auf der Grundplatte (3) äquidistant zueinander angeordnet sind, und/oder
   - zylindrisch sind.

4. Rotor-Stator-Anordnung (1) nach zumindest einem der Ansprüche 1 bis 3,
   **dadurch gekennzeichnet, dass**
   der Stator zumindest eine Spule (5) aufweist, die in dem Distanzabschnitt (6) zwischen den Magneten (4a,4b) an der Grundplatte (3) angeordnet ist, und/oder den Distanzabschnitt (6) quer zu einer Längserstreckung der Grundplatte (3) umfasst.

5. Rotor-Stator-Anordnung (1) nach zumindest einem der Ansprüche 1 bis 4,
   **dadurch gekennzeichnet, dass**
   die Flussplatte (2) und die Grundplatte (3) aus einem ferromagnetischen Material bestehen.

6. Rotor-Stator-Anordnung (1) nach zumindest einem der Ansprüche 1 bis 5,
   **dadurch gekennzeichnet, dass**
   in einer ringförmigen Anordnung (1) durch die Flussplatte (2) im Rotor und die Grundplatte (3) im Stator Plattenebenen definiert sind, wobei die Plattenebenen des Rotors und des Stators normal oder axial zur Drehachse des Rotors liegen.

7. Rotor-Stator-Anordnung (1) nach Anspruch 6,
   **dadurch gekennzeichnet, dass**
   die Flussplatte (2) teilringförmig oder kreisförmig oder rechteckig ist, wobei die Flussplatte (2) entlang ihrer Längsausdehnung eben oder gebogen ist.

8. Rotor-Stator-Anordnung (1) nach zumindest einem der Ansprüche 1 bis 7,
   **dadurch gekennzeichnet, dass**
   zwischen den Flussplatten (2) in Richtung ihrer Längsausdehnung ein Luftspalt vorliegt oder ein magnetisch isolierendes Material angeordnet ist.

9. Induktionsgenerator zum Erzeugen elektrischen Stromes mit einer Vielzahl an Magnetpaaren aus zwei Magneten (4a,4b), die dazu ausgebildet sind, ein dauerhaftes Magnetfeld (B) zu erzeugen, zumindest einer Spule (5) und zumindest einer Flussplatte (2) und einer Grundplatte (3) zur Führung des Magnetfelds (B),
   **dadurch gekennzeichnet, dass**
   die vorgenannten Komponenten in einer Rotor-Stator-Anordnung (1) nach zumindest einem der Ansprüche 1 bis 8 angeordnet sind.

Fig. 1

Fig. 2

Fig. 3

**Europäisches Patentamt**
**European Patent Office**
**Office européen des brevets**

# EUROPÄISCHER RECHERCHENBERICHT

**Nummer der Anmeldung**

EP 14 00 2974

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | WO 99/49556 A1 (DETRA SA [CH]; TU MAI XUAN [CH]; SCHWAB MICHEL [CH]) 30. September 1999 (1999-09-30) | 1,4,5,8,9 | INV. H02K21/44 H02K41/03 |
| Y | * Zusammenfassung; Abbildungen * * Seite 4, Zeile 3 - Seite 4, Zeile 30 * ----- | 2,3,6,7 | |
| X | JP H08 308192 A (NIPPON DENSO CO) 22. November 1996 (1996-11-22) | 1 | |
| Y | * Zusammenfassung; Abbildungen * ----- | 2,3 | |
| X | DE 10 2009 025298 A1 (KELAIDITIS KONSTANTIN [DE]) 5. Januar 2011 (2011-01-05) | 1 | |
| Y | * Zusammenfassung; Abbildungen * * Absatz [0044] - Absatz [0049] * ----- | 6,7 | |
| X | US 2013/094981 A1 (LIANG JIA-YUAN [TW] ET AL) 18. April 2013 (2013-04-18) * Zusammenfassung; Abbildungen * ----- | 1 | |

**RECHERCHIERTE SACHGEBIETE (IPC)**

H02K

Der vorliegende Recherchenbericht wurde für alle Patentansprüche erstellt

| Recherchenort | Abschlußdatum der Recherche | Prüfer |
|---|---|---|
| Den Haag | 30. Januar 2015 | Ramos, Horacio |

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 14 00 2974

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

30-01-2015

| Im Recherchenbericht angeführtes Patentdokument | Datum der Veröffentlichung | Mitglied(er) der Patentfamilie | Datum der Veröffentlichung |
|---|---|---|---|
| WO 9949556 A1 | 30-09-1999 | AU 9059698 A<br>WO 9949556 A1 | 18-10-1999<br>30-09-1999 |
| JP H08308192 A | 22-11-1996 | KEINE | |
| DE 102009025298 A1 | 05-01-2011 | KEINE | |
| US 2013094981 A1 | 18-04-2013 | TW 201317469 A<br>US 2013094981 A1 | 01-05-2013<br>18-04-2013 |

EPO FORM P0461

Für nähere Einzelheiten zu diesem Anhang : siehe Amtsblatt des Europäischen Patentamts, Nr.12/82